# EUROPEAN PATENT APPLICATION

(11) **EP 4 656 869 A1**
(43) Date of publication of application: **03.12.2025**
(21) Application number: 23932128.4
(22) Date of filing: 13.10.2023
(51) Int. Cl.: F03D 1/06, F03D 80/00, B05B 7/02

(54) **PROTECTIVE LAYER FORMING DEVICE AND CONTROL METHOD OF PROTECTIVE LAYER FORMING DEVICE**

(30) Priority: 07.04.2023 JP 2023062703
(71) Applicant: Mitsubishi Heavy Industries, Ltd., Tokyo 100-8332 (JP)
(72) Inventor: SHIBATA, Masaaki, Tokyo 100-8332 (JP); TAKAYANAGI, Kazufumi, Tokyo 100-8332 (JP); KOREMATSU, Yasuhiro, Tokyo 100-8332 (JP); OKANO, Yasushi, Tokyo 100-8332 (JP); YAMADA, Tomokazu, Tokyo 100-8332 (JP)
(74) Representative: Cabinet Beau de Loménie
(86) International application number: PCT/JP2023/037216
(87) International publication number: WO 2024/209718

(57) **Abstract**

Provided is a protective layer forming device that comprises: a protective layer forming unit (110); a movement mechanism that moves the protective layer forming unit (110) in the blade length direction; an articulated robot (130) that is attached to the movement mechanism and adjusts the position of the protective layer forming unit (110) in the blade thickness direction of a plurality of wind turbine blade bodies (5a) and the orientation of the protective layer forming unit (110) so that the construction direction of the protective layer forming unit (110) faces a construction region (FA); and a control part, wherein the protective layer forming part (110) includes a first spray unit (111) that sprays a first construction material onto a first construction range (SA1) centered on a first axis (X1) to form a protective layer, a second spray unit (112) that sprays a second construction material onto a second construction range (SA2) centered on a second axis (X2) to form a protective layer, and a first interval adjustment unit (114) that changes the inclination angle (θ1) of the second axis (X2) in a plane orthogonal to the blade length direction with respect to the first axis (X1).

## Description

### Technical Field

The present disclosure relates to a protective layer forming device and a control method of a protective layer forming device.

### Background Art

As a wind turbine rotor rotates, a wind turbine blade collides with foreign substances (for example, raindrops, dust, and the like) in the air and is eroded, so that erosion occurs on a leading edge side of the wind turbine blade. In order to protect the wind turbine blade from the erosion, it is known to form a protective layer for erosion resistance on a leading edge portion of the wind turbine blade (refer to PTL 1). In addition, it is known that a protective layer is formed on a surface of a workpiece by spraying a construction material to the workpiece from a spray unit that is moved by a movement device (refer to PTL 2).

### Citation List

### Patent Literatures

[PTL 1] Japanese Unexamined Patent Application Publication No. 2022-175830
[PTL 2] Japanese Unexamined Patent Application Publication No. 2022-103682

### Summary of Invention

### Technical Problem

In a case where the protective layer is formed on the leading edge portion of the wind turbine blade, since a length of the leading edge portion of the wind turbine blade in a blade length direction is long, a construction time is prolonged when the protective layer is formed using a single spray unit as in PTL 2. Therefore, it is conceivable to widen a region where the protective layer is formed and shorten a construction time by attaching a plurality of spray units to the movement device and simultaneously forming the protective layer from the plurality of spray units.

However, since a change in curvature along a blade chord direction is large at the leading edge portion of the wind turbine blade, there is a possibility that a desired protective layer may not be obtained when the protective layer is formed simultaneously from the plurality of spray units. For example, in the region where the change in curvature of the leading edge portion along the blade chord direction is large, in a case where an angle at which one spray unit sprays the construction material onto the surface of the wind turbine blade and an angle at which the other spray unit sprays the construction material onto the surface of the wind turbine blade are greatly different from each other, there is a possibility that a thickness and quality of the protective layer formed by the one spray unit and a thickness and quality of the protective layer formed by the other spray unit are greatly different from each other. In this case, there is a possibility that an appropriate protective layer cannot be formed in each region of the leading edge portion of the wind turbine blade.

The present disclosure has been made in view of such circumstances, and an object of the present disclosure is to provide a protective layer forming device and a control method of a protective layer forming device, which can obtain a protective layer having a desired thickness or quality while shortening a construction time for forming the protective layer on a leading edge portion of a tip portion in a blade length direction of a wind turbine blade main body.

### Solution to Problem

A protective layer forming device according to an aspect of the present disclosure that forms a protective layer in a tip portion in a blade length direction and in a construction range of a leading edge portion of a wind turbine blade main body formed of an FRP, the protective layer forming device including: a protective layer formation unit that forms a protective layer by spraying a construction material to the construction range with a transport gas; a movement mechanism that moves the protective layer formation unit in the blade length direction of the wind turbine blade main body; an adjustment mechanism that is attached to the movement mechanism and adjusts a position of the protective layer formation unit in a blade thickness direction of the wind turbine blade main body and an orientation of the protective layer formation unit such that a construction direction of the protective layer formation unit faces the construction range; and a control unit that controls the protective layer formation unit, the movement mechanism, and the adjustment mechanism, in which the protective layer formation unit includes a first spray unit that forms the protective layer by spraying a first construction material to a first construction range centered on a first axis, a second spray unit that forms the protective layer by spraying a second construction material to a second construction range centered on a second axis, and an angle changing unit that changes an inclination angle of the second axis with respect to the first axis in a plane orthogonal to the blade length direction.

A control method of a protective layer forming device according to an aspect of the present disclosure is a control method of a protective layer forming device that forms a protective layer in a tip portion in a blade length direction and in a construction range of a leading edge portion of a wind turbine blade main body formed of an FRP, in which the protective layer forming device includes a protective layer formation unit that forms a protective layer by spraying a construction material to the construction range with a transport gas, the protective layer formation unit includes a first spray unit that forms the protective layer by spraying a first construction material to a first construction range centered on a first axis and a second spray unit that forms the protective layer by spraying a second construction material to a second construction range centered on a second axis, the method including: an adjustment step of adjusting a position of the protective layer formation unit in a blade thickness direction of the wind turbine blade main body and an orientation of the protective layer formation unit such that a construction direction of the protective layer formation unit faces the construction range; an angle changing step of changing an inclination angle of the second axis with respect to the first axis in a plane orthogonal to the blade length direction; and a protective layer forming step of moving the protective layer formation unit in the blade length direction of the wind turbine blade main body and forming the protective layer by the protective layer formation unit.

### Advantageous Effects of Invention

According to the present disclosure, it is possible to provide a protective layer forming device and a control method of a protective layer forming device, which can obtain a protective layer having a desired thickness or quality while shortening a construction time for forming a protective layer in a tip portion of a wind turbine blade main body in a blade length direction and in a leading edge portion.

### Brief Description of Drawings

Fig. 1 is a schematic configuration diagram showing a wind power generation device using a wind turbine blade according to an embodiment of the present disclosure.
Fig. 2 is a plan view showing the wind turbine blade.
Fig. 3 is a front view of the wind turbine blade of Fig. 2.
Fig. 4 is a cross-sectional view of the wind turbine blade shown in Figs. 2 and 3.
Fig. 5 is a front view showing a state of installation of the wind turbine blade when a protective layer is formed.
Fig. 6 is a cross-sectional view at a support position in Fig. 5.
Fig. 7 is a partially enlarged front view showing a construction range of the protective layer formed at a tip of the wind turbine blade.
Fig. 8 is a partially enlarged front view showing the order of forming the protective layer.
Fig. 9 is a partially enlarged cross-sectional view showing a protective layer forming device of the present embodiment and a forming direction of the protective layer in a blade thickness direction.
Fig. 10 is a block diagram showing a control configuration of the protective layer forming device of the present embodiment.
Fig. 11 is a front view showing a state where a protective layer formation unit is disposed at a portion A of Fig. 9.
Fig. 12 is a flowchart showing a control method of the protective layer forming device of the present embodiment.
Fig. 13 is a front view showing a state where the protective layer formation unit is disposed at a portion B of Fig. 9.
Fig. 14 is a plan view showing a state where a protective layer formation unit according to a modification example is disposed at the portion A of Fig. 9. Description of Embodiments

Hereinafter, an embodiment according to the present disclosure will be described with reference to the drawings.

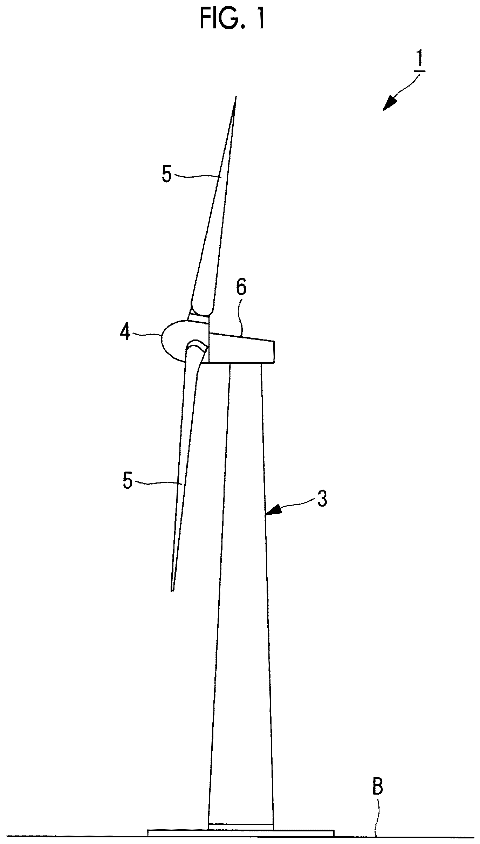

As shown in Fig. 1, a wind power generation device 1 has a tower 3 that is erected on an installation surface B, a nacelle 6 that is installed at an upper end of the tower 3, and a rotor head 4 that is rotatable around a substantially horizontal axis and that is provided in the nacelle 6.

A plurality of (for example, three) wind turbine blades 5 are attached to the rotor head 4 radially around a rotation axis thereof. Accordingly, the force of the wind that hits the wind turbine blade 5 in the direction of the rotation axis of the rotor head 4 is changed into power for rotating the rotor head 4 around the rotation axis. The obtained power is converted into electric power by a generator (not shown) and is supplied to the outside.

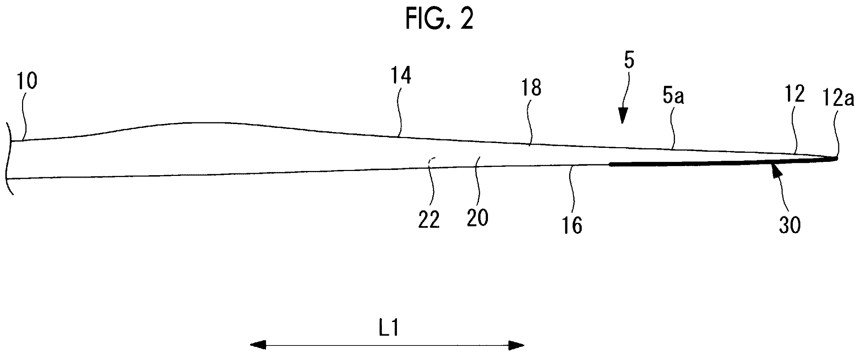

As shown in Fig. 2, the wind turbine blade 5 includes a blade root portion 10 that is attached to the rotor head 4, a blade tip portion (tip portion) 12 that is located farthest from the rotor head 4, and an airfoil portion 14 that extends between the blade root portion 10 and the blade tip portion 12. In Fig. 2, a blade length direction L1 is a horizontal direction.

The wind turbine blade 5 has a leading edge 16 and a trailing edge 18 from the blade root portion 10 to the blade tip portion 12. An outer shape of the wind turbine blade 5 is defined by a pressure-side surface 20 that is a pressure surface (positive pressure surface) and a suction-side surface 22 that is a negative pressure surface facing the pressure-side surface 20. The wind turbine blade 5 is formed of fiber-reinforced plastic (FRP). As the FRP, carbon-fiber reinforced plastic (CFRP), glass-fiber reinforced plastic (GFRP), or the like is used. An entire length of the wind turbine blade 5 from the blade root portion 10 to the blade tip portion 12 is 100 m class, for example, 80 m or more and 150 m or less. In addition, a wind turbine blade of 200 m class may be adopted as the wind turbine blade 5 of the present embodiment.

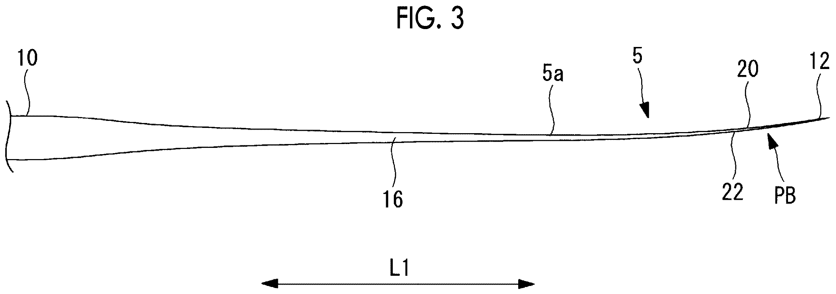

As shown in Fig. 3, the wind turbine blade 5 is provided with a pre-bend PB that is bent in advance on a blade tip portion 12 side. A bending amount of the pre-bend PB is determined in advance on the assumption that the wind turbine blade 5 receives a wind pressure during operation. Therefore, the pre-bend PB is bent such that the pressure-side surface 20 that receives the wind pressure is recessed and the suction-side surface 22 is protruded.

As shown in Fig. 2, a protective layer 30 is formed with respect to a wind turbine blade main body 5a in the blade tip portion 12 of the wind turbine blade 5 and in a predetermined region (leading edge portion) including the leading edge 16. A construction range of the protective layer 30 is indicated by a thick line in Fig. 2. The construction range of the protective layer 30 in the blade length direction L1 is 20 m to 40 m, preferably about 30 m, from a tip 12a of the blade tip portion 12. The protective layer 30 is made of a construction material (thermal spraying material) having excellent wear resistance, such as a cermet or a cobalt (Co) alloy such as a Co base alloy. The protective layer 30 is formed, for example, by laminating a plurality of pass layers by high velocity oxy-fuel (HVOF).

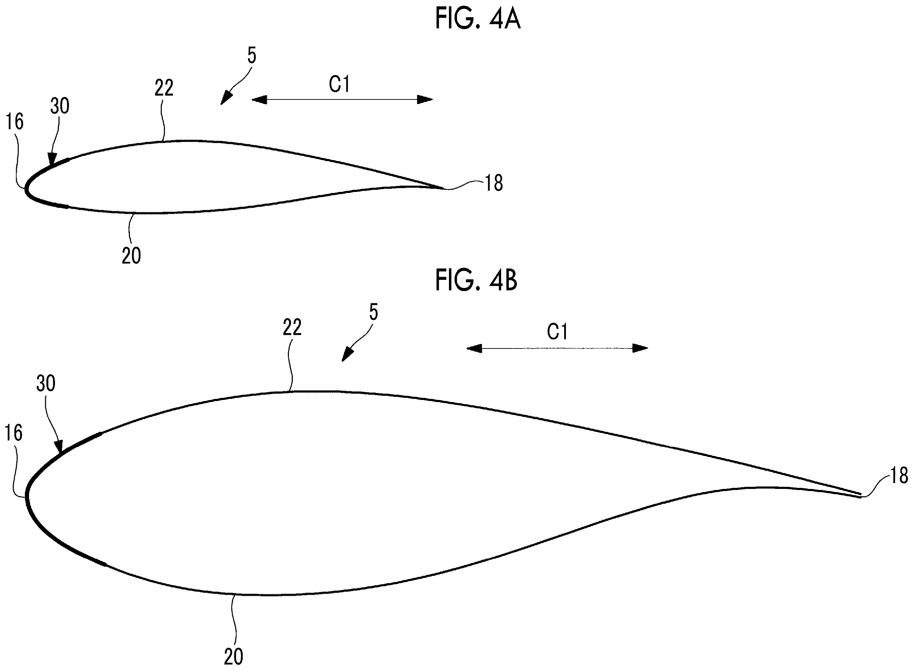

Fig. 4 shows a cross section of the wind turbine blade 5. In the drawing, the horizontal direction indicates a blade chord direction (a code direction) C1. In a case where the entire length of the wind turbine blade 5 is R, (a) is a cross section at a position of 0.9R, and (b) is a cross section at a position of 0.7R.

The blade chord length (chord length) c in the cross section of (a) of Fig. 4 is about 1 m. A blade thickness ratio t/c in a case where a maximum thickness of the blade thickness is t is 18%.

The blade chord length c in the cross section of (b) of Fig. 4 is about 2 m, and the blade thickness ratio t/c is 25%.

As shown by a thick line in Fig. 4, the protective layer 30 is formed from the pressure-side surface 20 to the suction-side surface 22 with the leading edge 16 interposed therebetween. The construction range of the protective layer 30 is determined in consideration of erosion of the wind turbine blade 5 due to raindrops or the like.

Next, a step of forming the protective layer 30 described above will be described.

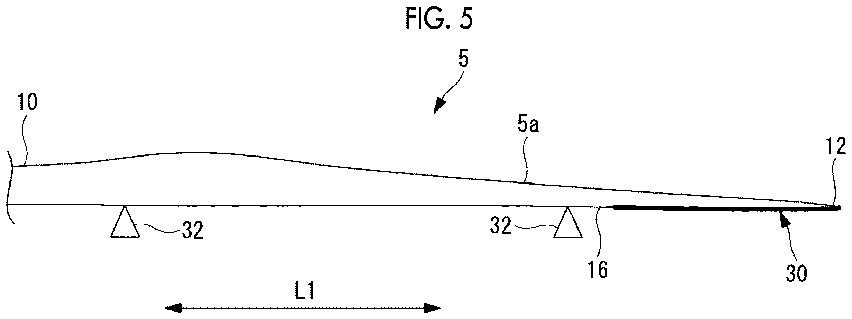

As shown in Fig. 5, after the outer shape of the wind turbine blade main body 5a of the wind turbine blade 5 is molded, the wind turbine blade 5 is installed in a posture in which the blade length direction L1 is substantially horizontal and the leading edge 16 faces downward (posture setting step). That is, the wind turbine blade main body 5a is installed in a vertical posture so that the blade chord direction C1 faces a substantially vertical direction. At this time, the wind turbine blade 5 is supported from below by a plurality of support platforms 32 provided at predetermined intervals in the blade length direction L1 (supporting step).

Fig. 5 shows that a leading edge 16 side of the wind turbine blade 5 is supported by the plurality of support platforms 32. Each support platform 32 is provided on an installation surface BS at the time of construction. The wind turbine blade 5 may be supported with the leading edge 16 side facing downward. For example, instead of the method of supporting the wind turbine blade 5 from below by the support platform 32 described above, the wind turbine blade 5 may be supported by a hanging member such as a wire hung from above the wind turbine blade 5 to hold and lift the leading edge 16 facing downward.

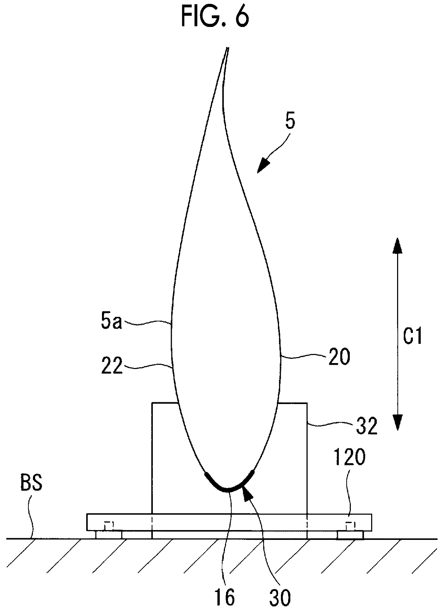

As shown in Figs. 5 and 6, in a state where the leading edge 16 is directed downward, a protective layer 30 is formed on the leading edge 16 of the wind turbine blade 5 by a protective layer forming device 100 (to be described later). The protective layer forming device 100 accelerates the construction material that is heated and melted or softened in a droplet or particle state by a transport gas and sprays the construction material onto the surface of the wind turbine blade main body 5a.

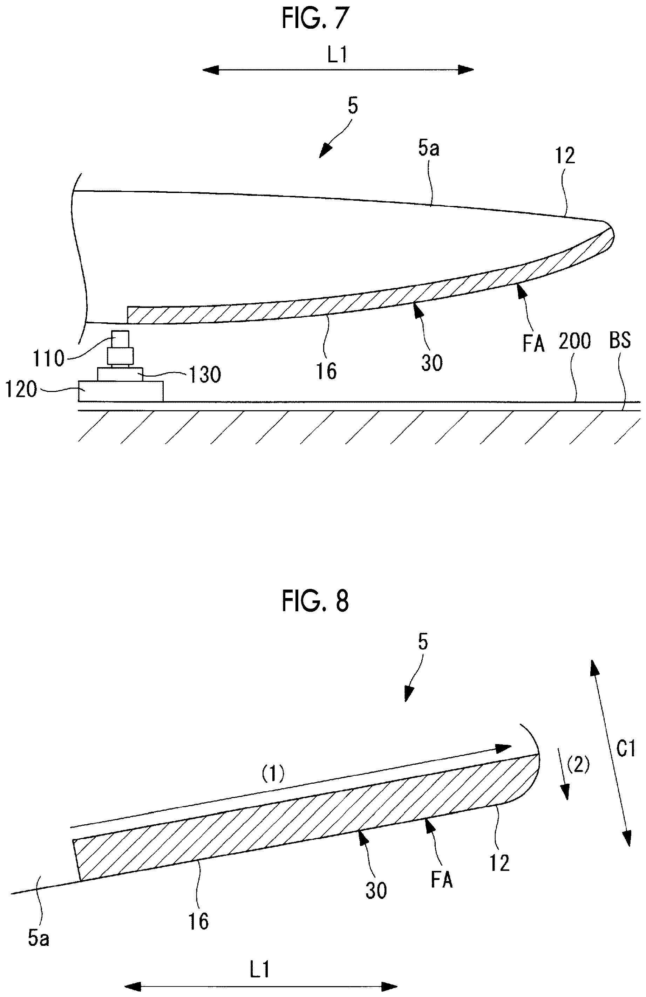

Fig. 7 shows a construction range FA in which the protective layer 30 is formed on the blade tip portion 12 of the wind turbine blade 5. As shown in the drawing, the protective layer 30 is formed in a predetermined range (leading edge portion) on the leading edge 16 side of the wind turbine blade 5.

As shown in Fig. 8, when the protective layer 30 is formed, a spray unit is reciprocated in the blade length direction L1 (direction indicated by (1) in the drawing) (first protective layer forming step). As a result, the protective layers are laminated in a plurality of layers. A thickness of the protective layer is, for example, about 500 µm to 600 µm. An irradiation width on the blade surface of the spray unit is, for example, about 10 mm.

After the first protective layer forming step, the position of the spray unit is changed to form the protective layer 30 at an adjacent position adjacent to the blade chord direction C1 (direction shown in (2) in the drawing) (blade chord position changing step). Then, at the adjacent position, the spray unit is reciprocated in the blade chord direction C1 in the blade length direction L1 (direction indicated by (1) in the drawing) as in the first protective layer forming step to form the protective layer 30 (second protective layer forming step). The first protective layer forming step and the second protective layer forming step are formed by scanning a first spray unit 111, a second spray unit 112, and a third spray unit 113 to reciprocate in the blade length direction L1. This is because a change in curvature of the blade surface in the blade length direction L1 is smaller than that in the blade chord direction C1.

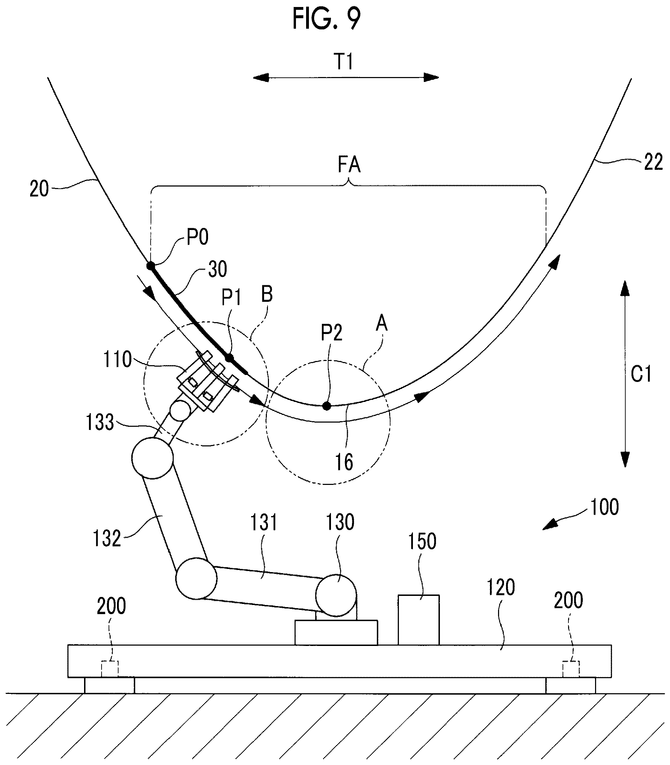

Fig. 9 is a partially enlarged cross-sectional view showing the protective layer forming device of the present embodiment and a forming direction of the protective layer in the blade chord direction C1. As shown in Fig. 9, the position change direction in the above-described blade chord position changing step is a direction from one blade surface (for example, the pressure-side surface 20) of the wind turbine blade 5 toward the other blade surface (for example, the suction-side surface 22) via the leading edge 16, as indicated by an arrow in the drawing.

Next, the protective layer forming device 100 of the present embodiment will be described.

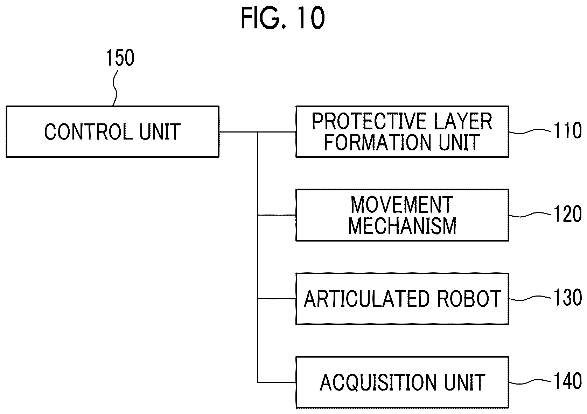

The protective layer forming device 100 shown in Fig. 9 is a device that forms the protective layer in the tip portion of the wind turbine blade main body 5a formed of an FRP in the blade length direction and in the construction range (FA) of the leading edge portion. Fig. 10 is a block diagram showing a control configuration of the protective layer forming device 100 of the present embodiment. As shown in Figs. 9 and 10, the protective layer forming device 100 includes a protective layer formation unit 110, a movement mechanism 120, an articulated robot (adjustment mechanism) 130, an acquisition unit 140, and a control unit 150.

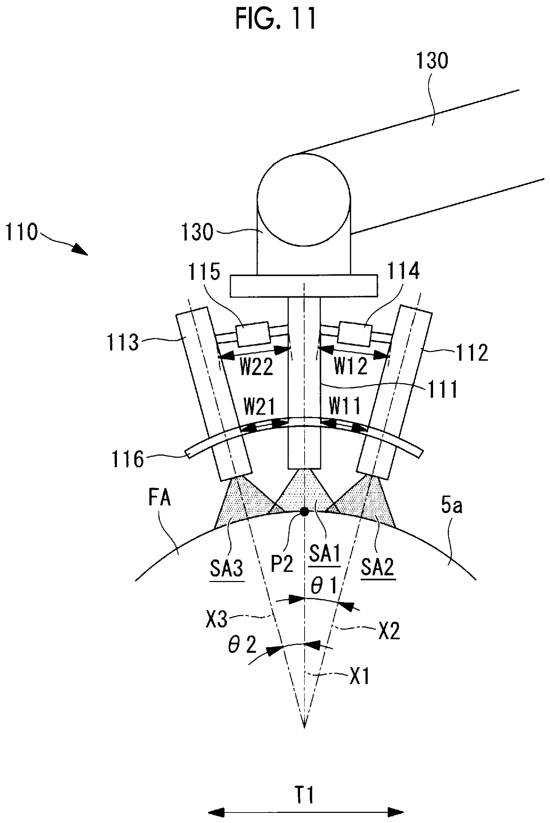

The protective layer formation unit 110 is a device that forms the protective layer by spraying the construction material onto the construction range FA with the transport gas. Fig. 11 is a front view showing a state where the protective layer formation unit 110 is disposed at the portion A of Fig. 9, and is a view of the wind turbine blade 5 as viewed along the blade length direction L1. As shown in Fig. 11, the protective layer formation unit 110 includes the first spray unit 111, the second spray unit 112, a connecting member 116, a first interval adjustment unit 114, and a second interval adjustment unit 115.

The first spray unit 111 is a device that sprays the construction material (first construction material) to a first construction range SA1 centered on a first axis X1 to form the protective layer. The second spray unit 112 is a device that sprays the construction material (second construction material) to a second construction range SA2 centered on a second axis X2 to form the protective layer. The third spray unit 113 is a device that sprays the construction material (third construction material) to a third construction range SA3 centered on a third axis X3 to form the protective layer.

The connecting member 116 is a member that connects one end side of the first spray unit 111 along the first axis X1, one end side of the second spray unit 112 along the second axis X2, and one end side of the third spray unit 113 along the third axis X3. The connecting member 116 is formed of an elastically deformable member (for example, a member formed of a resin material or a metal material), and holds a constant interval W11 between one end side of the first spray unit 111 along the first axis X1 and one end side of the second spray unit 112 along the second axis X2. Similarly, a constant interval W21 between one end side of the first spray unit 111 along the first axis X1 and one end side of the third spray unit 113 along the third axis X3 is held.

The first interval adjustment unit 114 is a device that adjusts an interval W12 between the other end side of the first spray unit 111 along the first axis X1 and the other end side of the second spray unit 112 along the second axis X2. The second interval adjustment unit 115 is a device that adjusts an interval W22 between the other end side of the first spray unit 111 along the first axis X1 and the other end side of the third spray unit 113 along the third axis X3. Since the interval W11 is held constant, the first interval adjustment unit 114 adjusts the interval W12 so that an inclination angle θ1 of the second axis X2 with respect to the first axis X1 in a plane orthogonal to the blade length direction L1 can be changed. In addition, the second interval adjustment unit 115 adjusts the interval W22 so that an inclination angle θ2 of the third axis X3 with respect to the first axis X1 in the plane orthogonal to the blade length direction L1 can be changed.

As described above, the connecting member 116, the first interval adjustment unit 114, and the second interval adjustment unit 115 function as an angle changing unit that changes the inclination angle θ1 of the second axis X2 with respect to the first axis X1 in the plane orthogonal to the blade length direction L1 and that changes the inclination angle θ2 of the third axis X3 with respect to the first axis X1 in the plane orthogonal to the blade length direction L1.

As shown in Fig. 7, the movement mechanism 120 is a mechanism that moves the protective layer formation unit 110 in the blade length direction L1 of the wind turbine blade main body 5a. The movement mechanism 120 moves in the blade length direction L1 along a rail 200 installed on the installation surface BS at the time of construction. The position of the movement mechanism 120 in the blade length direction L1 is controlled by the control unit 150.

The articulated robot 130 is a mechanism that is attached to the movement mechanism 120 and moves the protective layer formation unit 110 to any position in a three-dimensional space. As shown in Fig. 9, the articulated robot 130 adjusts the position of the protective layer formation unit 110 in the blade thickness direction T1 of the wind turbine blade main body 5a and the orientation of the protective layer formation unit 110 such that the construction direction of the protective layer formation unit 110 (direction in which the first spray unit 111 sprays the construction material along the first axis X1 in Fig. 11) faces the construction range FA of the wind turbine blade main body 5a.

The acquisition unit 140 is a device that acquires a shape of the wind turbine blade main body 5a at a position in the blade length direction L1 and the blade thickness direction T1 where the protective layer formation unit 110 is disposed. The position in the blade length direction L1 and in the blade thickness direction T1 where the protective layer formation unit 110 is disposed is, for example, a position P1 shown in Fig. 9. The position P1 is a position where the first axis X1 of the first spray unit 111 of the protective layer formation unit 110 and the surface of the wind turbine blade main body 5a intersect with each other. The acquisition unit 140 includes a storage unit (not shown) that stores in advance the curvature of the surface of the wind turbine blade main body 5a at each position in the blade length direction L1 and the blade thickness direction T1. Then, the acquisition unit 140 acquires the curvature stored in advance in the storage unit from the position in the blade length direction L1 and the blade thickness direction T1 where the protective layer formation unit 110 is disposed.

Various methods can be adopted as a method of causing the acquisition unit 140 to store the curvature of the surface of the wind turbine blade main body 5a at each position in the blade length direction L1 and the blade thickness direction T1 in the storage unit in advance. For example, the shape of the construction range FA on the surface of the wind turbine blade main body 5a may be measured in advance by a measurement device (not shown) and stored in the storage unit. In addition, for example, a measurement device (not shown) for measuring the shape of the construction range FA on the surface of the wind turbine blade main body 5a may be attached to the protective layer formation unit 110, and the curvature of the surface of the wind turbine blade main body 5a at the position where the protective layer formation unit 110 is disposed may be measured and transmitted to the acquisition unit 140.

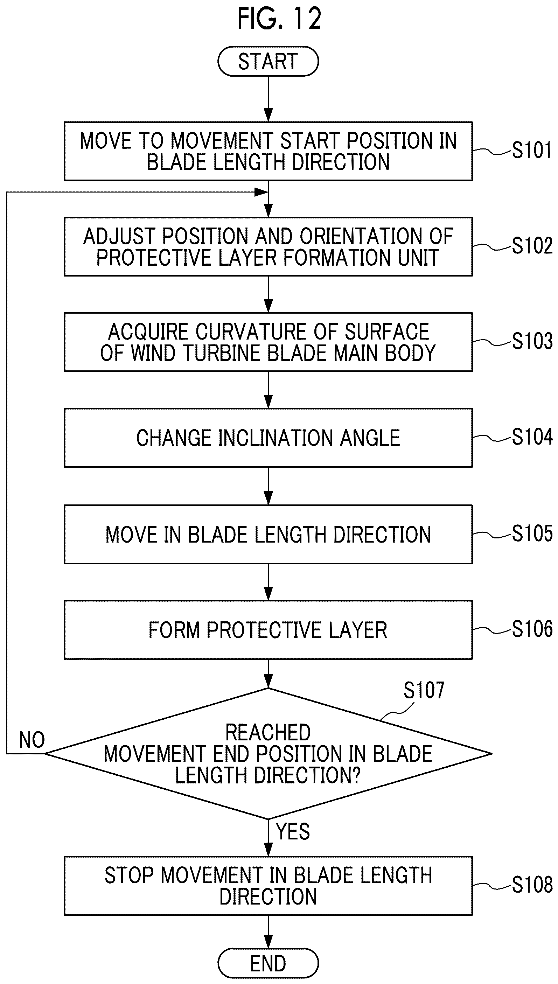

The control unit 150 is a device that controls the protective layer formation unit 110, the movement mechanism 120, and the articulated robot 130. Hereinafter, a control method of the protective layer forming device 100 executed by the control unit 150 will be described with reference to Fig. 12. Fig. 12 is a flowchart showing a control method of the protective layer forming device 100 of the present embodiment. Each processing in Fig. 12 is executed by the control unit 150 reading out a program stored in the storage unit (not shown).

In step S101, the control unit 150 controls the movement mechanism 120 to move the protective layer forming device 100 to a movement start position in the blade length direction L1. The movement start position is, for example, a position of an end portion of the construction range FA on the blade root portion 10 side in the blade length direction L1 (position shown in Fig. 7) in a case where the protective layer 30 of the construction range FA is formed from the blade root portion 10 side toward the blade tip portion 12.

In step S102, the control unit 150 controls the articulated robot 130 to adjust the position and the orientation of the protective layer formation unit 110. The control unit 150 controls the protective layer formation unit 110 to be disposed at a desired position in the blade thickness direction T1 and the blade chord direction C1 by adjusting angles of arms 131, 132, and 133 shown in Fig. 9. When the formation of the protective layer 30 is started, the control unit 150 controls the articulated robot 130 such that the protective layer formation unit 110 is disposed at a position P0 which is the start position in the forming direction.

In addition, the control unit 150 adjusts the orientation of the protective layer formation unit 110 of the wind turbine blade main body 5a of the protective layer formation unit 110 such that the construction direction of the protective layer formation unit 110 (the direction in which the first spray unit 111 sprays the construction material along the first axis X1 in Fig. 11) faces the construction range FA of the wind turbine blade main body 5a.

In step S103, the control unit 150 controls the acquisition unit 140 to acquire the curvature of the surface of the wind turbine blade main body 5a. The acquisition unit 140 acquires the curvature of the surface of the wind turbine blade main body 5a at the position in the blade length direction L1 and the blade thickness direction T1 where the protective layer formation unit 110 is disposed.

In step S104, the control unit 150 changes the inclination angle θ1 of the second axis X2 with respect to the first axis X1 in the plane orthogonal to the blade length direction L1, according to the curvature of the surface of the wind turbine blade main body 5a acquired in step S103. Similarly, the control unit 150 changes the inclination angle θ2 of the third axis X3 with respect to the first axis X1 in the plane orthogonal to the blade length direction L1, according to the curvature of the surface of the wind turbine blade main body 5a acquired in step S103.

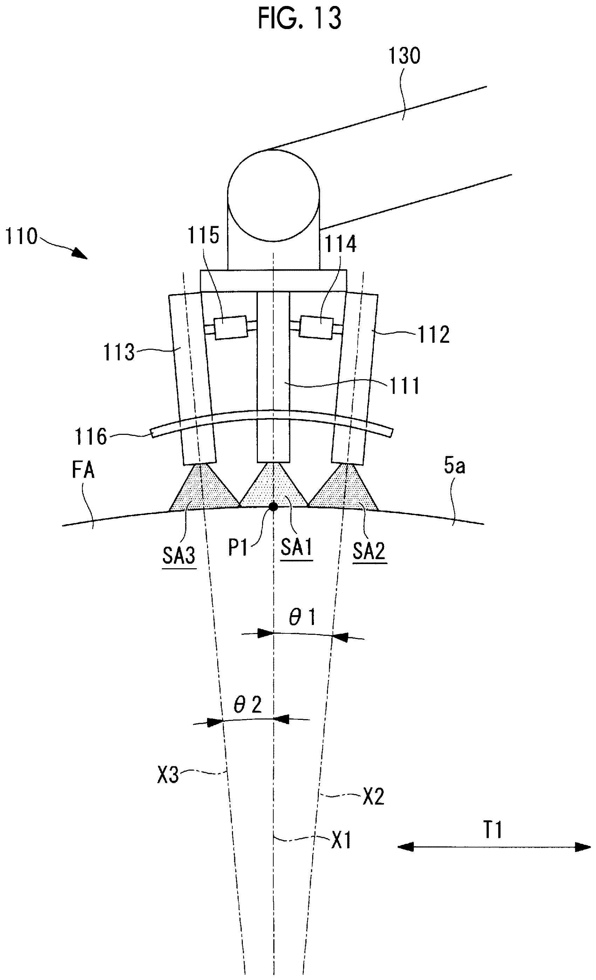

Here, a method of controlling the first interval adjustment unit 114 and the second interval adjustment unit 115 such that the inclination angle θ1 and the inclination angle θ2 according to the curvature of the surface of the wind turbine blade main body 5a acquired in step S103 are achieved will be described with reference to Figs. 11 and 13. Fig. 11 is a front view showing a state where the protective layer formation unit 110 is disposed at the portion A of Fig. 9. Fig. 13 is a front view showing a state where the protective layer formation unit 110 is disposed at the portion B of Fig. 9.

As shown in Fig. 11, the control unit 150 acquires the curvature at the position P2 in step S103 and changes the inclination angles θ1 and θ2 in step S104. The control unit 150 controls the first interval adjustment unit 114 such that, for example, the second axis X2 of the second spray unit 112 is the inclination angle θ1 intersecting the surface of the wind turbine blade main body 5a at a right angle (90 degrees). Similarly, the control unit 150 controls the second interval adjustment unit 115 such that, for example, the third axis X3 of the third spray unit 113 is the inclination angle θ2 intersecting the surface of the wind turbine blade main body 5a at the right angle (90 degrees).

The second axis X2 of the second spray unit 112 is the inclination angle θ1 intersecting the surface of the wind turbine blade main body 5a at the right angle (90 degrees) because the quality of the protective layer 30 formed in the construction range FA by the second spray unit 112 can be improved. Similarly, the third axis X3 of the third spray unit 113 is the inclination angle θ2 intersecting the surface of the wind turbine blade main body 5a at the right angle (90 degrees) because the quality of the protective layer 30 formed in the construction range FA by the third spray unit 113 can be improved.

As shown in Fig. 13, the control unit 150 acquires the curvature at the position P1 in step S103 and changes the inclination angles θ1 and θ2 in step S104. The control unit 150 controls the first interval adjustment unit 114 such that, for example, the second axis X2 of the second spray unit 112 is the inclination angle θ1 intersecting the surface of the wind turbine blade main body 5a at a right angle (90 degrees). Similarly, the control unit 150 controls the second interval adjustment unit 115 such that, for example, the third axis X3 of the third spray unit 113 is the inclination angle θ2 intersecting the surface of the wind turbine blade main body 5a at the right angle (90 degrees).

The curvature at the position P2 shown in Fig. 11 is larger than the curvature at the position P1 shown in Fig. 13. Therefore, the inclination angle θ1 shown in Fig. 13 is smaller than the inclination angle θ1 shown in Fig. 11. In addition, the inclination angle θ2 shown in Fig. 13 is smaller than the inclination angle θ2 shown in Fig. 11. In this way, by setting the inclination angles θ1 and θ2 according to the curvature of the surface of the wind turbine blade main body 5a acquired in step S103, even when the curvature of the surface of the wind turbine blade main body 5a changes, the protective layer 30 having good quality can be formed in the construction range FA.

In step S105, the control unit 150 controls the movement mechanism 120 to move the protective layer formation unit 110 in the blade length direction L1.

In step S106, the control unit 150 operates the first spray unit 111, the second spray unit 112, and the third spray unit 113 to spray the heated and melted or softened construction material in a droplet or particle state onto the surface of the wind turbine blade main body 5a by the transport gas to form the protective layer 30.

The formation of the protective layer 30 in step S106 is performed simultaneously with the movement of the protective layer formation unit 110 in step S105. That is, in steps S105 and S106, a step of moving the protective layer formation unit 110 in the blade length direction L1 of the wind turbine blade main body 5a and forming the protective layer 30 with the protective layer formation unit 110 (protective layer forming step) is executed.

In step S107, the control unit 150 determines whether the protective layer formation unit 110 reaches a movement end position in the blade length direction L1, and if the determination is YES, the processing proceeds to step S108, and if the determination is NO, the processing proceeds to step S102.

In step S108, since the protective layer formation unit 110 reaches the movement end position in the blade length direction L1, the control unit 150 controls the movement mechanism 120 to stop the movement of the protective layer formation unit 110 in the blade length direction L1, and ends the processing of the present flowchart.

The operation and effect of the protective layer forming device 100 of the present embodiment described above will be described.

According to the protective layer forming device 100 of the present embodiment, the protective layer formation unit 110 is moved to any position in the blade length direction L1 of the wind turbine blade main body 5a by the movement mechanism 120, and the position and the orientation of the protective layer formation unit 110 in the blade thickness direction T1 are adjusted by the articulated robot 130 such that the construction direction faces the construction range FA. In addition, the protective layer formation unit 110 has a plurality of spray units including the first spray unit 111, the second spray unit 112, and the third spray unit 113. Therefore, an operation of spraying the construction material from the first spray unit 111 to the first construction range SA1, an operation of spraying the construction material from the second spray unit 112 to the second construction range SA2, and an operation of spraying the construction material from the third spray unit 113 to the third construction range SA3 can be simultaneously performed. Accordingly, the construction time for forming the protective layer 30 in the blade tip portion 12 and in the leading edge 16 in the blade length direction L1 of the wind turbine blade main body 5a can be shortened.

In addition, according to the protective layer forming device 100 of the present embodiment, the inclination angle θ1 of the second axis X2 centered on the second construction range SA2 of the second spray unit 112 with respect to the first axis X1 centered on the first construction range SA1 of the first spray unit 111 in the plane orthogonal to the blade length direction L1 can be changed by the first interval adjustment unit 114 and the second interval adjustment unit 115. Therefore, by changing the inclination angle θ1 to an appropriate angle according to the shape of the surface of the wind turbine blade main body 5a, the protective layer 30 having a desired thickness or quality can be obtained.

According to the protective layer forming device 100 of the present embodiment, the curvature of the wind turbine blade main body 5a at the positions in the blade length direction L1 and the blade thickness direction T1 where the protective layer formation unit 110 is disposed is acquired by the acquisition unit 140, and the first interval adjustment unit 114 and the second interval adjustment unit 115 are controlled to have the inclination angle θ1 according to the curvature acquired by the acquisition unit 140. Accordingly, the inclination angle θ1 is changed to an appropriate angle according to the curvature of the surface of the wind turbine blade main body 5a, and the protective layer 30 having a desired thickness or quality can be obtained.

According to the protective layer forming device 100 of the present embodiment, the first interval adjustment unit 114 and the second interval adjustment unit 115 are controlled such that the first axis X1 is orthogonal to the surface of the wind turbine blade main body 5a, and the first interval adjustment unit 114 and the second interval adjustment unit 115 are controlled such that the second axis X2 is orthogonal to the surface of the wind turbine blade main body 5a. Since both the first axis X1 and the second axis X2 are at an angle orthogonal to the surface of the wind turbine blade main body 5a, the protective layer having a desired thickness or quality can be obtained by using both the first spray unit 111 and the second spray unit 112.

According to the protective layer forming device 100 of the present embodiment, the connecting member 116 connects one end side of the first spray unit 111 along the first axis X1 and one end side of the second spray unit 112 along the second axis X2, and the first interval adjustment unit 114 and the second interval adjustment unit 115 adjust the interval between the other end side of the first spray unit 111 along the first axis X1 and the other end side of the second spray unit 112 along the second axis X2. Accordingly, the inclination angle θ1 of the second axis X2 with respect to the first axis X1 in the plane orthogonal to the blade length direction L1 can be adjusted to any angle.

### [Other Embodiments]

In the protective layer formation unit 110 of the protective layer forming device 100 of the present embodiment, one end side of the first spray unit 111 along the first axis X1, one end side of the second spray unit 112 along the second axis X2, and one end side of the third spray unit 113 along the third axis X3 are connected to each other by the connecting member 116. However, other aspects may be adopted. For example, the first interval adjustment unit 114A may adjust the interval W11 between one end side of the first spray unit 111 along the first axis X1 and one end side of the second spray unit 112 along the second axis X2, and the first interval adjustment unit 114A may adjust the interval W21 between one end side of the first spray unit 111 along the first axis X1 and one end side of the third spray unit 113 along the third axis X3.

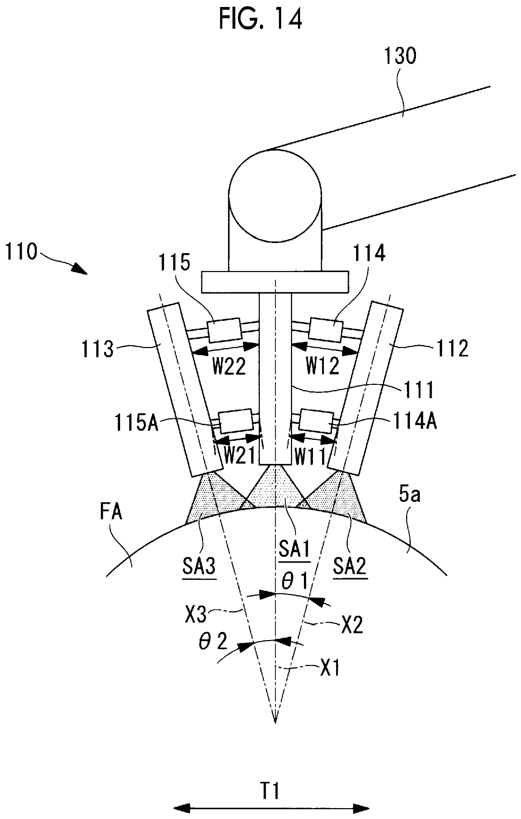

Fig. 14 is a plan view showing a state where a protective layer formation unit according to a modification example is disposed at the portion A of Fig. 9. As shown in Fig. 14, the protective layer formation unit 110 of the modification example includes the first interval adjustment unit (first adjustment unit) 114A that adjusts the interval W11 between one end side of the first spray unit 111 along the first axis X1 and one end side of the second spray unit 112 along the second axis X2, and the first interval adjustment unit (second adjustment unit) 114 that adjusts the interval W12 between the other end side of the first spray unit 111 along the first axis X1 and the other end side of the second spray unit 112 along the second axis X2.

In addition, the protective layer formation unit 110 of the modification example includes the second interval adjustment unit 115A that adjusts the interval W21 between one end side of the first spray unit 111 along the first axis X1 and one end side of the third spray unit 113 along the third axis X3, and the second interval adjustment unit 115 that adjusts the interval W22 between the other end side of the first spray unit 111 along the first axis X1 and the other end side of the third spray unit 113 along the third axis X3.

According to the protective layer forming device 100 of the present modification example, the first interval adjustment unit 114A adjusts the interval between one end side of the first spray unit 111 along the first axis X1 and one end side of the second spray unit 112 along the second axis X2, and the first interval adjustment unit 114 adjusts the interval between the other end side of the first spray unit 111 along the first axis X1 and the other end side of the second spray unit 112 along the second axis X2. Accordingly, the inclination angle θ1 of the second axis X2 with respect to the first axis X1 along the blade thickness direction T1 can be adjusted to any angle.

In addition, according to the protective layer forming device 100 of the present modification example, the interval between the first construction range SA1 of the first spray unit 111 and the second construction range SA2 of the second spray unit 112 along the blade thickness direction T1, and the interval between the first construction range SA1 of the first spray unit 111 and the third construction range SA3 of the third spray unit 113 along the blade thickness direction T1 can be adjusted to any interval. Accordingly, an overlapping range in the blade thickness direction T1 between the first construction range SA1 and the second construction range SA2, and an overlapping range in the blade thickness direction T1 between the first construction range SA1 and the third construction range SA3 can be appropriately adjusted, and the thickness and quality of the protective layer 30 can be appropriately set.

The protective layer forming device and the control method of a protective layer forming device described in each of the embodiments described above are understood as follows, for example.

The protective layer forming device (100) according to a first aspect of the present disclosure is a protective layer forming device (100) that forms a protective layer in a tip portion in a blade length direction and in a construction range (FA) of a leading edge portion of a wind turbine blade main body formed of an FRP, the protective layer forming device (100) including: a protective layer formation unit (110) that forms a protective layer by spraying a construction material to the construction range with a transport gas; a movement mechanism (120) that moves the protective layer formation unit in the blade length direction of the wind turbine blade main body; an adjustment mechanism (130) that is attached to the movement mechanism and adjusts a position of the protective layer formation unit in a blade thickness direction of the wind turbine blade main body and an orientation of the protective layer formation unit such that a construction direction of the protective layer formation unit faces the construction range; and a control unit (150) that controls the protective layer formation unit, the movement mechanism, and the adjustment mechanism, in which the protective layer formation unit includes a first spray unit (111) that forms the protective layer by spraying a first construction material to a first construction range centered on a first axis (X1), a second spray unit (112) that forms the protective layer by spraying a second construction material to a second construction range centered on a second axis (X2), and an angle changing unit (114, 115) that changes an inclination angle (θ1) of the second axis with respect to the first axis in a plane orthogonal to the blade length direction.

According to the protective layer forming device according to the first aspect of the present disclosure, the protective layer formation unit moves to any position in the blade length direction of the wind turbine blade main body by the movement mechanism, and the position and the orientation of the protective layer formation unit in the blade thickness direction are adjusted by the adjustment mechanism such that the construction direction faces the construction range. In addition, the protective layer formation unit has a plurality of spray units including a first spray unit and a second spray unit. Therefore, the operation of spraying the construction material to the first construction range from the first spray unit and the operation of spraying the construction material to the second construction range from the second spray unit can be performed at the same time. Accordingly, the construction time for forming the protective layer in the tip portion of the wind turbine blade main body in the blade length direction and in the leading edge portion can be shortened.

In addition, according to the protective layer forming device according to the first aspect of the present disclosure, the inclination angle of the second axis centered on the second construction range of the second spray unit with respect to the first axis centered on the first construction range of the first spray unit in the plane orthogonal to the blade length direction can be changed by the angle changing unit. Therefore, by changing the inclination angle to an appropriate angle according to the shape of the surface of the wind turbine blade main body, a protective layer having a desired thickness or quality can be obtained.

In the first aspect, the protective layer forming device according to a second aspect of the present disclosure includes an acquisition unit (14) that acquires a shape of the wind turbine blade main body at a position in the blade length direction and the blade thickness direction where the protective layer formation unit is disposed, and the control unit controls the angle changing unit to have the inclination angle according to the shape acquired by the acquisition unit.

According to the protective layer forming device according to the second aspect of the present disclosure, the shape of the wind turbine blade main body at the position in the blade length direction and the blade thickness direction where the protective layer formation unit is disposed is acquired by the acquisition unit, and the angle changing unit is controlled to have the inclination angle according to the shape acquired by the acquisition unit. Accordingly, the inclination angle can be changed to an appropriate angle according to the shape of the surface of the wind turbine blade main body, and a protective layer having a desired thickness or quality can be obtained.

In the second aspect, the protective layer forming device according to the third aspect of the present disclosure further includes the following configuration. That is, the acquisition unit acquires a curvature of the wind turbine blade main body along the blade thickness direction, and the control unit controls the angle changing unit to have the inclination angle according to the curvature acquired by the acquisition unit.

According to the protective layer forming device according to the third aspect of the present disclosure, the curvature of the wind turbine blade main body along the blade thickness direction at the position in the blade length direction and the blade thickness direction where the protective layer formation unit is disposed is acquired by the acquisition unit, and the angle changing unit is controlled to have the inclination angle according to the curvature acquired by the acquisition unit. Accordingly, the inclination angle is changed to an appropriate angle according to the curvature of the surface of the wind turbine blade main body in the blade thickness direction, and a protective layer having a desired thickness or quality can be obtained.

In the second aspect, the protective layer forming device according to a fourth aspect of the present disclosure further includes the following configuration. That is, the control unit controls the adjustment mechanism such that the first axis is orthogonal to a surface of the wind turbine blade main body, and controls the angle changing unit such that the second axis is orthogonal to the surface of the wind turbine blade main body.

According to the protective layer forming device according to the fourth aspect of the present disclosure, the angle changing unit is controlled such that the first axis is orthogonal to a surface of the wind turbine blade main body, and the angle changing unit is controlled such that the second axis is orthogonal to the surface of the wind turbine blade main body. Since both the first axis and the second axis are at an angle orthogonal to the surface of the wind turbine blade main body, a protective layer having a desired thickness or quality can be obtained by using both the first spray unit and the second spray unit.

In any one of the first aspect to the fourth aspect, the protective layer forming device according to a fifth aspect of the present disclosure further includes the following configuration. That is, the angle changing unit includes a connecting member (116) that connects one end side of the first spray unit along the first axis and one end side of the second spray unit along the second axis, and an interval adjustment unit (114, 115) that adjusts an interval between the other end side of the first spray unit along the first axis and the other end side of the second spray unit along the second axis.

According to the protective layer forming device according to the fifth aspect of the present disclosure, the connecting member connects the one end side of the first spray unit along the first axis and the one end side of the second spray unit along the second axis, and the interval adjustment unit adjusts the interval between the other end side of the first spray unit along the first axis and the other end side of the second spray unit along the second axis. Accordingly, the inclination angle of the second axis with respect to the first axis in the plane orthogonal to the blade length direction can be adjusted to any angle.

In any one of the first aspect to the fourth aspect, the protective layer forming device according to a sixth aspect of the present disclosure further includes the following configuration. That is, the protective layer formation unit includes a first adjustment unit (114A) that adjusts an interval between one end side of the first spray unit along the first axis and one end side of the second spray unit along the second axis, and a second adjustment unit (114B) that adjusts an interval between the other end side of the first spray unit along the first axis and the other end side of the second spray unit along the second axis.

According to the protective layer forming device according to the sixth aspect of the present disclosure, the first adjustment unit adjusts the interval between the one end side of the first spray unit along the first axis and the one end side of the second spray unit along the second axis, and the second adjustment unit adjusts the interval between the other end side of the first spray unit along the first axis and the other end side of the second spray unit along the second axis. Accordingly, the inclination angle of the second axis with respect to the first axis along the blade thickness direction can be adjusted to any angle.

A control method of a protective layer forming device according to a seventh aspect of the present disclosure is a method of forming a protective layer in a tip portion in a blade length direction and in a construction range of a leading edge portion of a wind turbine blade main body formed of an FRP, in which the protective layer forming device includes a protective layer formation unit that forms a protective layer by spraying a construction material to the construction range with a transport gas, the protective layer formation unit includes a first spray unit that forms the protective layer by spraying a first construction material to a first construction range centered on a first axis and a second spray unit that forms the protective layer by spraying a second construction material to a second construction range centered on a second axis, the method includes an adjustment step of adjusting a position of the protective layer formation unit in a blade thickness direction of the wind turbine blade main body and an orientation of the protective layer formation unit such that a construction direction of the protective layer formation unit faces the construction range; an angle changing step of changing an inclination angle of the second axis with respect to the first axis in a plane orthogonal to the blade length direction; and a protective layer forming step of moving the protective layer formation unit in the blade length direction of the wind turbine blade main body and forming the protective layer by the protective layer formation unit.

According to the control method of a protective layer forming device according to the seventh aspect of the present disclosure, the protective layer formation unit moves to any position in the blade length direction of the wind turbine blade main body by a movement step, and the position and the orientation of the protective layer formation unit in the blade thickness direction are adjusted by an adjustment step such that the construction direction faces the construction range. In addition, the protective layer formation unit has a plurality of spray units including a first spray unit and a second spray unit. Therefore, the operation of spraying the construction material to the first construction range from the first spray unit and the operation of spraying the construction material to the second construction range from the second spray unit can be performed at the same time. Accordingly, the construction time for forming the protective layer in the tip portion of the wind turbine blade main body in the blade length direction and in the leading edge portion can be shortened.

In addition, according to the control method of a protective layer forming device according to the seventh aspect of the present disclosure, the inclination angle of the second axis centered on the second construction range of the second spray unit with respect to the first axis centered on the first construction range of the first spray unit in the plane orthogonal to the blade length direction can be changed by an angle changing step. Therefore, by changing the inclination angle to an appropriate angle according to the shape of the surface of the wind turbine blade main body, a protective layer having a desired thickness or quality can be obtained.

### Reference Signs List

5a: wind turbine blade main body
10: blade root portion
12: blade tip portion
12a: tip
14: airfoil portion
16: leading edge
18: trailing edge
20: pressure-side surface
22: suction-side surface
30: protective layer
32: support platform
100: protective layer forming device
110: protective layer formation unit
111: first spray unit
112: second spray unit
113: third spray unit
114, 114A: first interval adjustment unit
115, 115A: second interval adjustment unit
116: connecting member
120: movement mechanism
130: articulated robot (adjustment mechanism)
140: acquisition unit
150: control unit
200: rail
B: installation surface
BS: installation surface at time of construction
C1: blade chord direction
FA: construction range
L1: blade length direction
SA1: first construction range
SA2: second construction range
SA3: third construction range
T1: blade thickness direction
X1: first axis
X2: second axis
X3: third axis
θ1, θ2: inclination angle

## Claims

1. A protective layer forming device that forms a protective layer in a tip portion in a blade length direction and in a construction range of a leading edge portion of a wind turbine blade main body formed of an FRP, the protective layer forming device comprising:
a protective layer formation unit that forms a protective layer by spraying a construction material to the construction range with a transport gas;
a movement mechanism that moves the protective layer formation unit in the blade length direction of the wind turbine blade main body;
an adjustment mechanism that is attached to the movement mechanism and adjusts a position of the protective layer formation unit in a blade thickness direction of the wind turbine blade main body and an orientation of the protective layer formation unit such that a construction direction of the protective layer formation unit faces the construction range; and
a control unit that controls the protective layer formation unit, the movement mechanism, and the adjustment mechanism, wherein
the protective layer formation unit includes
a first spray unit that forms the protective layer by spraying a first construction material to a first construction range centered on a first axis,
a second spray unit that forms the protective layer by spraying a second construction material to a second construction range centered on a second axis, and
an angle changing unit that changes an inclination angle of the second axis with respect to the first axis in a plane orthogonal to the blade length direction.

2. The protective layer forming device according to Claim 1, further comprising:
an acquisition unit that acquires a shape of the wind turbine blade main body at a position in the blade length direction and the blade thickness direction where the protective layer formation unit is disposed, wherein
the control unit controls the angle changing unit to have the inclination angle according to the shape acquired by the acquisition unit.

3. The protective layer forming device according to Claim 2, wherein
the acquisition unit acquires a curvature of the wind turbine blade main body along the blade thickness direction, and
the control unit controls the angle changing unit to have the inclination angle according to the curvature acquired by the acquisition unit.

4. The protective layer forming device according to Claim 2, wherein the control unit controls the adjustment mechanism such that the first axis is orthogonal to a surface of the wind turbine blade main body, and controls the angle changing unit such that the second axis is orthogonal to the surface of the wind turbine blade main body.

5. The protective layer forming device according to any one of Claims 1 to 4, wherein the angle changing unit includes
a connecting member that connects one end side of the first spray unit along the first axis and one end side of the second spray unit along the second axis, and
an interval adjustment unit that adjusts an interval between the other end side of the first spray unit along the first axis and the other end side of the second spray unit along the second axis.

6. The protective layer forming device according to any one of Claims 1 to 4, wherein the protective layer formation unit includes
a first adjustment unit that adjusts an interval between one end side of the first spray unit along the first axis and one end side of the second spray unit along the second axis, and
a second adjustment unit that adjusts an interval between the other end side of the first spray unit along the first axis and the other end side of the second spray unit along the second axis.

7. A control method of a protective layer forming device that forms a protective layer in a tip portion in a blade length direction and in a construction range of a leading edge portion of a wind turbine blade main body formed of an FRP, in which
the protective layer forming device includes
a protective layer formation unit that forms a protective layer by spraying a construction material to the construction range with a transport gas,
the protective layer formation unit includes
a first spray unit that forms the protective layer by spraying a first construction material to a first construction range centered on a first axis and
a second spray unit that forms the protective layer by spraying a second construction material to a second construction range centered on a second axis,
the method comprising:
an adjustment step of adjusting a position of the protective layer formation unit in a blade thickness direction of the wind turbine blade main body and an orientation of the protective layer formation unit such that a construction direction of the protective layer formation unit faces the construction range;
an angle changing step of changing an inclination angle of the second axis with respect to the first axis in a plane orthogonal to the blade length direction; and
a protective layer forming step of moving the protective layer formation unit in the blade length direction of the wind turbine blade main body and forming the protective layer by the protective layer formation unit.
